# Europäisches Patentamt

# European Patent Office

# Office européen des brevets

(19)

(11) Veröffentlichungsnummer: **0 066 642**
**A1**

(12) ## EUROPÄISCHE PATENTANMELDUNG

(21) Anmeldenummer: **81104418.9**

(22) Anmeldetag: **09.06.81**

(51) Int. Cl.³: **F 16 F 1/38**

(43) Veröffentlichungstag der Anmeldung: **15.12.82**
**Patentblatt 82/50**

(84) Benannte Vertragsstaaten: **AT CH DE FR GB IT LI**

(71) Anmelder: **SIEMENS AKTIENGESELLSCHAFT Berlin und München, Postfach 22 02 61, D-8000 München 22 (DE)**

(72) Erfinder: **Rohloff, Rolf, Flürleinstrasse 16, D-8700 Würzburg (DE)**
Erfinder: **Wustmann, Oswald, Mühlweg 28, D-8702 Gerbrunn (DE)**

(54) **Verbindungsvorrichtung und Verfahren zur Montage der Verbindungsvorrichtung mit einer elastischen hülsenförmigen Dämpfungsbuchse.**

(57) Die Dämpfungsbuchse (3) ist in eine Öffnung (21) eines ersten Bauteils (Motor-Schwinge 2) eingesteckt und liegt zur axialen Lagesicherung mit je einer endseitigen, radial überstehenden Wulst (31 bzw. 32) axial gegen das erste Bauteil (2) an. In die Hülsenöffnung (33) der Dämpfungsbuchse (3) ist anschließend das zweite Bauteil (Rohr 1) eingesteckt. Zur Reduzierung des Fertigungs- und Montageaufwandes ist die Wulst an dem durch die Öffnung (21) des ersten Bauteils (1) durchgesteckten Ende der Dämpfungsbuchse (3) als im unmontierten Zustand der Dämpfungsbuchse (3) nach radial innen in deren Hülsenöffnung (33) ragende und nach dem Einführen der Dämpfungsbuchse (3) in die Öffnung (21) durch das in die Hülsenöffnung (33) eingedrückte zweite Bauteil (Rohr 1) nach radial außen umstülpbare und dadurch axial gegen das erste Bauteil (2) anlegbare Wulst (31) ausgebildet.

Eine Anwendung eignet sich insbesondere zur schwingungsentkoppelten Halterung von Stoßdämpfern oder von Motoren an einer Antriebseinheit, z.B. von Motoren an der Unterseite eines Waschmaschinen-Laugenbehälters.

EP 0 066 642 A1

SIEMENS AKTIENGESELLSCHAFT
Berlin und München

0066642

Unser Zeichen
VPA 81 P 3 0 9 5 E

Verbindungsvorrichtung und Verfahren zur Montage der Verbindungsvorrichtung mit einer elastischen hülsenförmigen Dämpfungsbuchse

Die Erfindung bezieht sich auf eine Verbindungsvorrichtung und ein Verfahren zur Montage der Verbindungsvorrichtung mit einer elastischen hülsenförmigen Dämpfungsbuchse gemäß Oberbegriff des Patentanspruchs 1; derartige Verbindungsvorrichtungen sind z.B. zur schwingungsentkoppelten Aufhängung eines elektrischen Antriebsmotors am Laugenbehälter einer Waschmaschine bekannt.

Die bei den bekannten Verbindungsvorrichtungen benutzten elastischen hülsenförmigen Dämpfungsbuchsen weisen üblicherweise im unmontierten Zustand an ihren Enden je eine radial überstehende Wulst auf, mit der sie im montierten Zustand axial gegen die Stirnseite oder eine Schulter des ersten Bauteils anliegen und dadurch eine axiale Lagesicherung der montierten Dämpfungsbuchse gewährleisten; dazu muß bei der Montage die Dämpfungsbuchse mit ihrem einen Ende unter radialer Zusammenpressung der einen Wulst durch die Öffnung des ersten Bauteils hindurchgedrückt werden. Das zweite mit dem ersten zu verbindene und durch die Hülsenöffnung der Dämpfungsbuchse durchzusteckende Bauteil wird üblicherweise als Rohrstück ausgeführt; eine durch dieses Rohrstück durchgesteckte Stiftschraube kann dann beidseitig Arme von Bügeln aufnehmen, die z.B. an der Unterseite eines Laugenbehälters einer Waschmaschine befestigt sind, während das erste Bauteil als eine von den Armen endseitig übergriffene Schwinge des elektrischen Antriebsmotors der Waschmaschine ausgebildet ist.

Bk 2 Bih / 04.06.1981

0066642

Aufgabe der vorliegenden Erfindung ist es, den Aufwand für Fertigung und Montage einer Verbindungsvorrichtung der eingangs genannten Art ohne Gefährdung der Betriebssicherheit einer solchen Verbindungsvorrichtung wesentlich zu vereinfachen.

Diese Aufgabe wird bei einer Verbindungsvorrichtung der eingangs genannten Art durch die kennzeichnende Lehre des Patentanspruches 1 gelöst. Vorteilhafte Ausgestaltungen der Erfindung werden durch die Gegenstände der Unteransprüche 2 und 3 beschrieben.

Bei der erfindungsgemäß ausgebildeten Verbindungsvorrichtung kann die im fertig montierten Zustand an ihren beiden Enden mit einer radial über die Öffnung des ersten Bauteils überstehenden Wulst versehene Dämpfungsbuchse trotzdem auf einfache Weise und ohne großen Kraftaufwand durch die Öffnung durchgesteckt werden, da der durchzusteckende Teil der Dämpfungsbuchse an seiner Außenfläche keine wulstartige Aufweitung aufzuweisen braucht; trotzdem ist eine sichere formschlüssige axiale Lagefixierung der montierten Dämpfungsbuchse gewährleistet, da beim anschließenden Einstecken des zweiten Bauteils in die Hülsenöffnung der Dämpfungsbuchse beim An- bzw. Unterfahren der Innenwulst diese mit geringem Kraftaufwand nach radial außen weggedrückt bzw. umgestülpt und zur formschlüssigen axialen Anlage gegen das erste Bauteil gebracht werden kann.

In vorteilhafter Weise ist vorgesehen, daß die Dämpfungsbuchse, insbesondere in ihrer Ausführung mit beidseitig am ersten Bauteil zur Anlage kommenden Wülsten, mit nur in Axialrichtung entfernbaren Formteilen herstellbares Guß- bzw. Spritzgußteil ausgebildet ist, wobei zweckmäßigerweise die Teilungsebene der inneren, axial in Gegenrichtung zu ziehenden Formstempelteile im Bereich der Innenwulst an dem einen Ende der Dämpfungsbuchse und die Teilungsebene der beiden äußeren axial in Gegenrichtung zu ziehenden Formstempelteile im Bereich der von Anfang an radial außen angeformten Außenwulst am anderen Ende der Dämpfungsbuchse vorgesehen ist. Im Gegensatz zu dieser bei der erfindungsgemäß ausgebildeten Verbindungsvorrichtung einfachen Fertigungsmöglichkeit der Dämpfungsbuchse ist die Herstellung der bekannten Dämpfungsbuchsen nur mit Hilfe von axial und radial, also in zwei getrennten Richtungen, zu entfernenden Formteilen möglich.

Normalerweise wird eine Dämpfungsbuchse mit an ihren beiden Enden jeweils vorgesehener Wulst zur beidseitigen axialen Lagesicherung verwendet werden. Eine Dämpfungsbuchse mit nur einer einzigen und dann erfindungsgemäß nach dem vereinfachten Durchstecken nach außen umstülpbaren Buchse kann jedoch dann vorteilhaft einsetzbar sein, wenn die Öffnung für die Dämpfungsbuchse bei der Montage nur von der der Wulstanlage gegenüberliegenden Seite her zugänglich ist.

Die erfindungsgemäße Verbindungsvorrichtung erlaubt also gleichzeitig und in sich gegenseitig unterstützender Weise eine wesentliche fertigungs- und montagetechnische Vereinfachung, ohne daß dadurch eine sichere betriebsmäßige axiale Lagesicherung der Dämpfungsbuchse in dieser Verbindungsvorrichtung in irgendeiner Weise gefährdet ist.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 eine Teildraufsicht auf einen unterhalb eines Waschmaschinen-Laugenbehälters an zwei Bügeln schwingungsisoliert gehalterten Antriebsmotors,

Fig. 2 in einem Längsschnittbild einen vergrößerten Detailausschnitt einer schwingungsisolierten Lagerung gemäß Fig. 1,

Fig. 3 in einem Schnittbild das erste in der Verbindungsvorrichtung zu verbindende Bauteil,

Fig. 4 die in eine Öffnung des ersten Bauteils gemäß Fig. 3 einzusetzende Dämpfungsbuchse,

Fig. 5 das unter Zwischenschaltung der Dämpfungsbuchse gemäß Fig. 4 mit dem ersten Bauteil gemäß Fig. 3 zu verbindende zweite Bauteil,

Fig. 6 die gemäß Fig. 3 bis Fig. 5 zu verbindenden Bauteile in einem Vormontageschritt,

Fig. 7 die gemäß Fig. 3 bis Fig. 5 miteinander zu verbindenden Bauteile in ihrem Endmontagezustand.

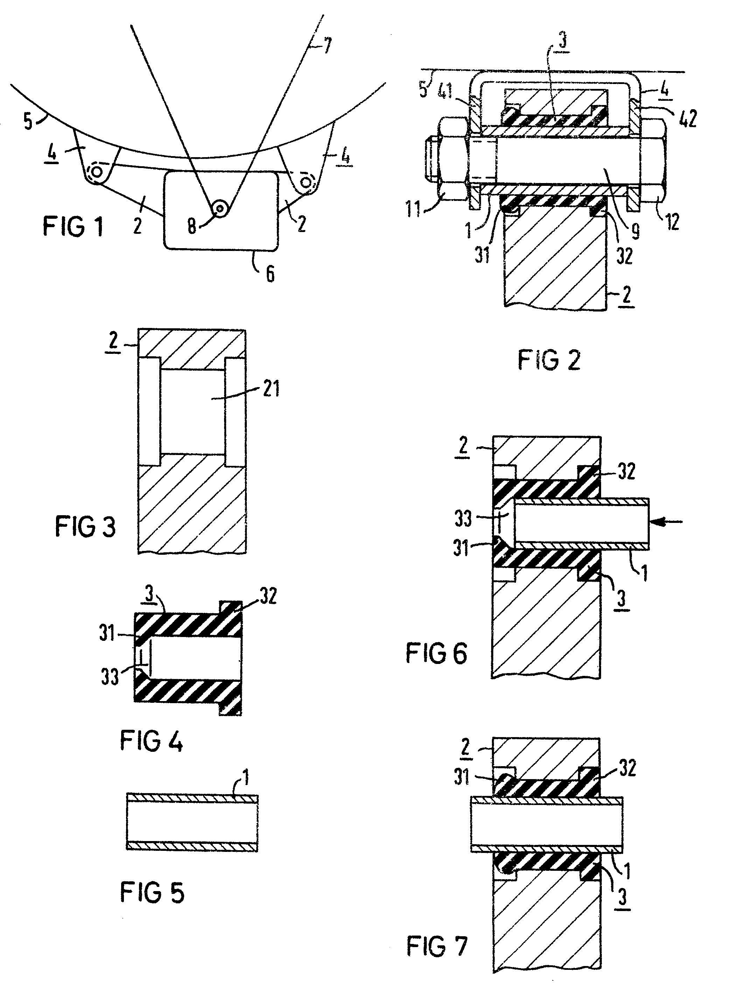

In einer grobschematischen Darstellung zeigt Fig. 1 zwei an der Unterseite eines Laugenbehälters 5 einer Waschmaschine befestigte, gabelförmige Halterungsbügel 4 mit je zwei Gabellaschen 41, 42, die an ihren nach unten abstehenden freien Enden unter Zwischenschaltung einer schwingungsentkoppelnden Dämpfungsbuchse Motor-Schwingen 2 aufnehmen, die einstückig an das Außengehäuse eines Elektromotors 6, insbesondere an ein stirnseitiges Lagerschild angeformt, sind; auf einem aus dem Lagerschild herausragenden Ende der Motorwelle ist eine Riemenscheibe 8 befestigt, die über einen Antriebsriemen 7 eine hier nicht näher dargestellte Riemenscheibe einer in dem Laugenbehälter 6 gelagerten Waschtrommel antreibt. Die schwingungsentkoppelte Verbindung zwischen je einer der beiden Halterungsbügel 4 und je einer der beiden Motor-Schwingen 2 ist im Detail aus dem Schnittbild einer dieser Verbindungen gemäß Fig. 2 entnehmbar.

0066642

Die beiden Gabellaschen 41, 42 der gabelförmigen Halterungsbügel sind jeweils über ein Rohr 1 und eine Dämpfungsbuchse 3 mit der mit ihrem freien Ende zwischen die
Gabellaschen 41, 42 reichenden Motor-Schwinge 2 des
Motors 6 verbunden. Im einzelnen ist zu dieser Verbindung zunächst in eine durchgehende Öffnung 21 der Motor-
Schwinge 2 die Dämpfungsbuchse 3 eingesteckt, die im
fertig montierten Zustand an ihren Enden mit je einer
die Öffnung 21 radial überragenden Wulst beidseitig an
der Motor-Schwinge 2 anliegt und somit in ihrer axialen
Lage fixiert ist. Anschließend ist durch die Hülsenöffnung 33 der Dämpfungsbuchse 3 ein Rohr 1 durchgesteckt,
das zur Aufnahme einer durch das Rohr durchgesteckten,
zur Halterung der Gabellaschen 41, 42 vorgesehenen Stiftschraube 9 und      gleichzeitig als Distanzstück für die
stirnseitig anliegenden Gabellaschen 41, 42 dient, die
durch Anziehen der Mutter 11 und Gegendrücken des Schraubenkopfes 12 der Stiftschraube 9 gegen das Rohr 1 festspannbar sind.

Fig. 3 zeigt in einem Längsschnittbild eine Motor-Schwinge
2 mit einer Öffnung 21, durch die die in Fig. 4 dargestellte Dämpfungsbuchse 3 durch- bzw. einzustecken ist;
Fig. 5 zeigt das die Stiftschraube 9 aufnehmende Rohr 1,
das wiederum seinerseits durch die Hülsenöffnung 33 der
Dämpfungsbuchse 3 ein- bzw. durchzustecken ist. Die in
Fig. 4 in ihrem unmontierten Zustand dargestellte erfindungsgemäß ausgebildete Dämpfungsbuchse 3 weist an ihrem
rechten Ende eine von Anfang an nach radial außen angeformte Wulst 32 und an ihrem linken, durch die Öffnung 21
der Motor-Schwinge 2 hindurchzuführenden Ende eine nach
radial innen angeformte Innenwulst 31 auf.

Aus einem Vergleich der Figuren 6 und 7 ist ersichtlich,
wie in montagetechnisch besonders einfacher Weise die
Dämpfungsbuchse 3 ohne Notwendigkeit der Zusammenpressung einer Außenwulst zunächst in die an der Außenfläche der Dämpfungsbuchse 3 bündig anliegende Öffnung 21 der Motor-Schwinge 2 einführbar und wie anschließend die nach innen angeformte Wulst 31 durch das Nachschieben des Rohres 1 dann gemäß Fig. 7 zu einer radial außen die Einschuböffnung 21 überragenden und stirnseitig im Sinne einer axialen Lagesicherung an der Motor-Schwinge 2 anliegenden Wulst wegdrückbar bzw. umstülpbar ist.

Gegebenenfalls kann in vorteilhafter Weise über den Bereich des mit der Innenwulst versehenen Endes der Dämpfungsbuchse eine Verdünnung der Hülsenwandstärke an ihrem Außenumfang vorgesehen werden, derart daß im Bereich des axial inneren Randansatzes der Innenwulst eine Scharnierwirkung beim Wegdrücken der Innenwulst nach radial außen entsteht und die Innenwulst um dieses Scharnier nach außen zu einer Außenwulst nicht nur wegdrückbar sondern gezielter umstülpbar ist. In zweckmäßiger Weise könnte auch im Bereich des inneren Randansatzes der Innenwulst und somit im Bereich der Wulst-Umknicklinie bei einem Umstülpen eine außen um die Distanzbuchse herumlaufende Ringnut vorgesehen werden. Eine derartige Ringnut kann bei geringer und trotzdem zum gezielten Umstülpen wirksamer radialer Tiefe aufgrund der Elastizität des Distanzbuchsen-Materials trotzdem mit axial ziehbarem, im Bereich der Ringnut mit einer geringen radialen Erhebung versehenen Formstempel hergestellt werden.

Ein vorteilhaftes Verfahren zur Montage der Verbindungsvorrichtung mit einer erfindungsgemäß ausgebildeten elastischen hülsenförmigen Dämpfungsbuchse ist somit durch folgende wesentliche Verfahrensschritte gekennzeichnet:

a) Ein- bzw. Durchstecken der Dämpfungsbuchse durch die Öffnung des ersten Bauteils (Motor-Schwinge) mit ihrem mit der "Innenwulst" versehenen einen Ende bis zur axialen Anlage ihrer "Außenwulst" am anderen Ende an der einen Seite des ersten Bauteils,

b) Durchstecken des zweiten Bauteils (Rohr) durch die Hülsenöffnung der Dämpfungsbuchse und bei An- bzw. Unterfahren der zunächst nach radial innen gerichteten "Innenwulst" Umstülpen dieser "Innenwulst" zu einer axial gegen die andere Seite des ersten Bauteils anliegenden "Außenwulst",

c) Durchstecken der Stiftschraube durch Schraubenöffnungen der vor das Rohr gebrachten Gabellaschen der am Laugenbehälter befestigten gabelförmigen Halterungsbügel und Festschrauben der Gabellaschen gegen die Stirnseiten des Rohres.

7 Figuren
4 Patentansprüche

<u>Patentansprüche</u>

1. Verbindungsvorrichtung und Verfahren zur Montage der Verbindungsvorrichtung mit einer elastischen hülsenförmigen Dämpfungsbuchse, die mit ihrem einen, mit einer angeformten radialen Wulst versehenen Ende in eine Öffnung eines ersten Bauteils einsteckbar ist, und zur axialen Lagesicherung in ihrer Endlage mit der nach radial außen überstehenden Wulst gegen das erste Bauteil axial anliegt und in deren innere Hülsenöffnung ein mit dem ersten Bauteil über die Dämpfungsbuchse zu verbindendes zweites Bauteil einsteckbar ist, d a d u r c h g e k e n n z e i c h n e t , daß die Wulst als im unmontierten Zustand der Dämpfungsbuchse (3) nach radial innen in deren Hülsenöffnung (33) vorstehende, nach dem Einführen der Dämpfungsbuchse (3) in die Öffnung (21) des ersten Bauteils (2) durch das in die Hülsenöffnung (33) eingedrückte zweite Bauteil (Rohr 1) nach radial außen wegdrückbare bzw. umstülpbare und dabei axial gegen das erste Bauteil (2) anlegbare Wulst (31) ausgebildet ist.

2. Verbindungsvorrichtung mit einer in eine Öffnung eines ersten Bauteils eingesteckten, beidseitig der Öffnung mit je einer angeformten radial überstehenden, an dem ersten Bauteil axial anliegenden Dämpfungsbuchse nach Anspruch 1, d a d u r c h g e k e n n z e i c h n e t , daß die eine, an dem durch die Öffnung (21) durchgesteckten Ende der Dämpfungsbuchse (3) vorgesehene Wulst als zunächst nach radial innen angeformte und durch das in die Hülsenöffnung (33) eingesteckte zweite Bauteil (Rohr 1) nach radial außen wegdrückbare bzw. umstülpbare Wulst (31) und die andere Wulst als von Anfang an nach radial außen angeformte Wulst (32) ausgebildet sind.

3. Verbindungsvorrichtung nach Anspruch 1 und insbesondere nach Anspruch 2, d a d u r c h g e - k e n n z e i c h n e t , daß die Dämpfungsbuchse (3) als mit nur in Axialrichtung entfernbaren Formteilen herstellbares Guß- bzw. Spritzgußteil ausgebildet ist.

4. Verfahren zur Montage der Verbindungsvorrichtung nach einem der Ansprüche 1 bis 3, insbesondere nach Anspruch 2, g e k e n n z e i c h n e t durch zumindest folgende aufeinanderfolgenden Verfahrensschritte:

a) Ein- bzw. Durchstecken der Dämpfungsbuchse durch die Öffnung des ersten Bauteils (Motor-Schwinge) mit ihrem mit der "Innenwulst" versehenen einen Ende bis zur axialen Anlage ihrer "Außenwulst" am anderen Ende an der einen Seite des ersten Bauteils,

b) Durchstecken des zweiten Bauteils (Rohr) durch die Hülsenöffnung der Dämpfungsbuchse und bei An- bzw. Unterfahren der zunächst nach radial innen gerichteten "Innenwulst" Umstülpen dieser "Innenwulst" zu einer, axial gegen die andere Seite des ersten Bauteils anliegenden "Außenwulst",

c) Durchstecken der Stiftschraube durch Schraubenöffnungen der vor das Rohr gebrachten Gabellaschen der am Laugenbehälter befestigten gabelförmigen Halterungsbügel und Festschrauben der Gabellaschen gegen die Stirnseiten des Rohres.

0066642
81 P 3 0 9 5 E

FIG 1

FIG 2

FIG 3

FIG 4

FIG 5

FIG 6

FIG 7

**Europäisches Patentamt**

| EINSCHLÄGIGE DOKUMENTE | | | KLASSIFIKATION DER ANMELDUNG (Int. Cl. ) |
|---|---|---|---|
| Kategorie | Kennzeichnung des Dokuments mit Angabe, soweit erforderlich, der maßgeblichen Teile | betrifft Anspruch | |
| X | FR - A - 2 268 992 (THE GENERAL TIRE & RUBBER COMPANY) <br><br> * das ganze Dokument * | 1-4 | F 16 F 1/38 |
| X | DE - B - 1 155 640 (RIV OFFICINE DI VILLAR PEROSA) <br><br> * das ganze Dokument * | 1-3 | |
| X | FR - A - 1 122 183 (L.F. THIRY) <br><br> * Seite 4, rechte Spalte bis Ende; Figuren 1,2,3,13,14 * | 1-4 | **RECHERCHIERTE SACHGEBIETE (Int. Cl.³)** <br><br> F 16 F |
| X | GB - A - 1 081 174 (THE MONARCH RUBBER CO.) <br><br> * Seite 3, Zeile 80 bis Seite 4, Zeile 55; Figuren 1-5 * | 1-3 | |
| A | DE - B - 1 059 723 (L.F. THIRY) <br><br> * das ganze Dokument * | 1-3 | |
| A | DE- C - 819 602 (L.F. THIRY) <br><br> * das ganze Dokument * | 1-3 | |
| A | FR - A - 2 009 366 (THE GENERAL TIRE & RUBBER CO.) <br><br> * das ganze Dokument *  ./. | 1-3 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-01-1982 | CINQUANTINI |

EPA form 1503.1   06.78

## EINSCHLÄGIGE DOKUMENTE

| Kategorie | Kennzeichnung des Dokuments mit Angabe, soweit erforderlich, der Maßgeblichen Teile | betrifft Anspruch |
|---|---|---|
| A | FR - A - 2 285 550 (SAVIEM) | |
| A | US - A - 2 993 715 (P.C. HUTTON) | |

KLASSIFIKATION DER ANMELDUNG (Int. Cl.)

RECHERCHIERTE SACHGEBIETE (Int. Cl.3)

EPA Form 1503.2   06.78